Europäisches Patentamt

European Patent Office

Office européen des brevets

(11) Numéro de publication : **0 366 761 B1**

(12) **FASCICULE DE BREVET EUROPEEN**

(45) Date de publication du fascicule du brevet :
30.09.92 Bulletin 92/40

(51) Int. Cl.⁵ : **B29B 15/10**, B29B 15/12

(21) Numéro de dépôt : 89905414.2

(22) Date de dépôt : 20.04.89

(86) Numéro de dépôt international :
PCT/FR89/00186

(87) Numéro de publication internationale :
WO 89/10248 02.11.89 Gazette 89/26

(54) PROCEDE ET METHODE POUR PREIMPREGNER DES ELEMENTS DE RENFORTS UTILISABLES POUR REALISER UN MATERIAU COMPOSITE, PRODUIT OBTENU.

(30) Priorité : 22.04.88 FR 8805492

(43) Date de publication de la demande :
09.05.90 Bulletin 90/19

(45) Mention de la délivrance du brevet :
30.09.92 Bulletin 92/40

(84) Etats contractants désignés :
BE DE GB IT NL

(56) Documents cités :
DE-A- 3 021 106
FR-A- 1 597 516
US-A- 3 384 505
US-A- 3 730 678
US-A- 3 975 479
Gummi, Asbest, Kunststoffe, vol. 35, no 11,
Nov. 1982 (Stuttgart, DE), E.V. Gellhorn et
al.:"Wickeln-Verfahrungsoptimierungdurch
Vakuumtränkung", p. 630-635

(56) Documents cités :
Japanese Patent Gazette, section Ch,
semaine 8814, classe A, no 88-095858,
Derwent Publications Ltd (Londres, GB)
&JP-A-63047108 (SMC K.K.) 27.02.1988
Patent Abstracts of Japan, vol. 10, no 118
(M-475)(2175), 2 Mai 1986 & JP-A-60247509
(MATSUSHITA DENKO K.K.)07.12.1985

(73) Titulaire : **INSTITUT FRANCAIS DU PETROLE
4, Avenue de Bois Préau
F-92502 Rueil-Malmaison (FR)**

(72) Inventeur : **DO, Anh, Thuan
Résidence Beauregard 35, avenue
Saut-du-Loup
F-78170 La Celle-Saint-Cloud (FR)**
Inventeur : **HUVEY, Michel
2, avenue des Pinsons
F-78380 Bougival (FR)**

(74) Mandataire : **Andreeff, François et al
INSTITUT FRANCAIS DU PETROLE 4, avenue
de Bois-Préau
F-92502 Rueil-Malmaison (FR)**

## Description

La présente invention concerne un procédé et un dispositif permettant de préimprégner des éléments de renfort; tels des fibres, des tissus ou des tresses avant de les utiliser dans la confection des matériaux composites pour les pièces que l'on veut réaliser.

Comparée à l'imprégnation (en continu) des éléments de renfort, que l'on réalise juste avant la mise en oeuvre des pièces composites à fabriquer, la préimprégnation permet notamment, de stocker le produit obtenu pendant une durée relativement longue (plusieurs mois), de réduire la quantité de bulles incluses dans les pièces, de diminuer les effilochages des éléments de renfort.

D'une façon plus particulière, la présente invention propose une amélioration du procédé et du dispositif de préimprégnation des éléments de renfort, avec une substance stabilisable telle une résine liquide thermodurcissable.

Les techniques antérieures de préimprégnation d'éléments de renfort consistent par exemple à faire pénétrer sous pression la substance, mais la pénétration n'est pas homogène et des gaz, tels de l'air ou de la vapeur d'eau, sont dissous.

La technique la plus utilisée actuellement pour la préimprégnation consiste, à faire pénétrer la résine (diluée au moyen d'un solvant volatil, tel que de l'acétone ou du méthanol), dans des fibres de renfort, par passage dans un bain ou sur un rouleau, puis à faire évaporer ce solvant dans un four tunnel de longueur importante, et enfin, à embobiner le fil ou la bande préimprégnée.

Le plus souvent, le traitement thermique effectué amène la résine à l'état B, ce qui signifie que la résine est solide à température ambiante, mais qu'elle peut être fondue par réchauffage.

Si la température de fusion de la résine peut être atteinte lors du stockage, on interpose un film antiadhérent sous les fils préimprégnés avant de le bobiner, de telle sorte que le débobinage soit toujours possible à froid sans endommagement des fibres de renfort. Sans l'interposition d'un tel film antiadhérent, et au cas où la température de fusion serait atteinte lors du stockage, la bobine serait après refroidissement, transformée en un bloc massif.

Il n'est pas possible, en effet, de dérouler un fil ou une bande d'une bobine devenue un bloc sans au moins endommager gravement les fibres, ce qui provoquera une chute grave des propriétés mécaniques de l'objet constitué ultérieurement au moyen de ces fibres.

La présence de solvant, nécessaire pour que l'imprégnation soit rapide avec des résines visqueuses même à chaud, telles les résines époxydes, fait que la quantité de résine effectivement entraînée par les fibres est faible, de l'ordre de 25 à 37 % en volume.

Il n'est pas possible, avec ces procédés antérieurs, d'obtenir des éléments de renfort préimprégnés avec des teneurs en résine élevées, de 45 à 55 % en volume.

Il a été également proposé pour effectuer la préimprégnation avec une résine diluée par un solvant, en évitant le four tunnel de séchage en continu, d'imprégner la bobine directement en faisant un vide peu poussé pour éviter l'ébullition du solvant, puis en admettant la résine diluée par le solvant, et en appliquant ensuite une pression pour forcer la résine diluée à pénétrer dans les fibres.

Il est alors nécessaire, ultérieurement, d'éliminer le solvant par un traitement thermique sous vide peu poussé pour éviter l'ébullition du solvant.

Ce traitement amène la résine à l'état B, ce qui fait que le produit est pratiquement inutilisable sans endommagement grave des fibres.

Dans les deux cas, l'utilisation d'un solvant lors de l'imprégnation, entraîne une diminution de volume lors de son élimination. Cette diminution de volume entraîne corrélativement l'apparition de vides entre les fibres, ou des décollements à l'interface verre-résine avec apparition de bulles.

Les produits moulés à partir de ces préimprégnés ne sont pas transparents, mais translucides ou laiteux dans les meilleurs des cas, ce qui traduit la présence de nombreuses microbulles.

Ces bulles diminuent considérablement les propriétés mécaniques qui ne dépendent pas seulement de la présence des fibres. Ainsi, la résistance au cisaillement est affectée de façon importante par la présence de microbulles.

Ces microbulles permettent également la condensation d'eau ayant pénétré par perméabilité à travers la résine et cette eau condensée peut attaquer les renforts qui y sont sensibles, comme la fibre de verre. Les propriétés sont alors susceptibles de se dégrader au cours du temps, surtout en atmosphère humide et en présence de cycles de température, ce qui correspond à un vieillissement naturel.

Pour éviter de tels inconvénients, il a été proposé d'imprégner sous vide, par de la résine exempte de solvant, des objets préalablement mis en forme, par exemple par bobinage sur un mandrin, et soumis à un traitement par le vide permettant de retirer l'air des fibres et d'effectuer une imprégnation à coeur donnant un produit de bonne qualité après polymérisation, puis retrait du mandrin.

Le document Grummi, Asbest, Kunstoffe, 1982, vol. 35, pages 630-635, montre que les épaisseurs imprégnables suivant ce procédé sont réduites, à moins d'utiliser des durées prohibitives. En pratique, l'épaisseur maximum d'imprégnation est limitée à 12 mm.

Le procédé selon l'invention permet de préimprégner des bobines épaisses par des résines visqueuses, sans solvant, en fournissant des bobines de préimprégnés à l'état A, avec des taux de résine en volume plus important que dans le procédés traditionnels. Ceci permet d'obtenir ultérieurement des produits finis de plus faible module d'élasticité, mais conservant une résistance élevée à long terme (fatigue, vieillissement).

Un avantage supplémentaire de l'invention est de fournir un procédé qui évite bon nombre de manipulation des produits mis en forme et imprégnés ultérieurement.

Un autre avantage de l'invention est de fournir des éléments de renforts préimprégnés par une substance à l'état A que l'on peut faire évoluer, pour en ajuster sa viscosité, de manière telle que les fils préimprégnés soient lors de leur mise en oeuvre, aptes à ne pas glisser lors de leur pose. Ce dernier avantage ne peut être obtenu avec des éléments de renforts lorsqu'ils sont secs, ni lorsqu'ils sont préimprégnés de résine à l'état B, ni enfin lorsqu'ils sont imprégnés en continu par une résine à l'état A.

Par état A de la résine, on entend l'état dans lequel la résine est liquide, soluble et collante (à la température ambiante).

Par état B de la résine, on entend l'état dans lequel la résine est solide, fusible et peu collante (à la température ambiante).

La présente invention propose un procédé et un dispositif fournissant des produits préimprégnés comportant la substance à l'état A notamment, et ne contenant ni gaz, ni solvants dissous, qui sont après cuisson, exempts de microporosité.

Les pièces composites obtenues par le procédé et le dispositif selon notre invention, ont des propriétés physiques et chimiques améliorées, telles les propriétés mécaniques (traction, compression, cisaillement...), optiques, d'homogénéité, de résistance à l'eau.

Les fils utilisés pour la confection des éléments peuvent par exemple être en carbone, en bore, en verre, en polyamide.

L'invention fournit un procédé pour préimprégner avec une substance de préimprégnation exempte de solvants à l'état A, des éléments de renfort, tels des fibres, des tissus ou des tresses, lesdits éléments de renfort étant utilisables pour réaliser un matériau composite.

Ce procédé est notamment caractérisé en ce qu'il comporte la succession des étapes suivantes :

– on retrancanne ou bobine lesdits éléments de renfort sur un mandrin, les spires de couches consécutives d'une bobine faisant un angle alpha tel que la valeur de cet angle permette d'obtenir un taux d'imprégnation par la substance exempte de solvants non réactifs suffisant,

– on place les éléments de renfort dans une enceinte

– on produit dans la enceinte un vide suffisant en intensité et en durée pour éliminer au moins la plus grande partie de l'eau et de gaz présents dans les éléments de renfort, et

– on effectue la préimprégnation en introduisant ladite substance dans l'enceinte, de façon que lesdits éléments de renfort soient immergés par la substance durant toute l'étape de préimprégnation, les éléments de renfort préimprégnés obtenus étant exempts de solvants et dans l'état A.

On pourra dégazer sous vide ladite substance avant de l'introduire dans l'enceinte.

On pourra utiliser ladite substance chaude.

Après avoir introduit la quantité suffisante de la substance, on pourra maintenir l'enceinte sous vide. Après avoir produit le vide dans l'enceinte et introduit la substance dans ladite enceinte en quantité suffisante pour que la substance recouvre encore lesdits éléments une fois qu'ils seront imprégnés, on pourra mettre l'enceinte sous pression.

Lorsque l'on met l'enceinte sous pression, on pourra empêcher l'introduction de matière, telle des gaz ou de l'eau dans la substance imprégnant les éléments du renfort. Les éléments de renfort pourront être des fibres bobinées sur un mandrin et les spires de couches consécutives pourront se croiser sous un angle au moins égal à 30° et de préférence au moins égal à 45°, voire 60°.

Lorsque les éléments de renforts sont des tresses ou des bandes de tissus, on peut procéder à l'imprégnation directement sur la bobine de tresses ou de bandes, telle qu'elle est fournie par la machine de tressage ou de fabrication de ruban.

Lorsque lesdits éléments de renfort sont des fibres bobinées sur un mandrin, le mandrin pourra être ajouré.

L'invention sera bien comprise et ses avantages apparaîtront plus nettement à la lecture de la description qui suit, relative à un exemple de préimprégnation d'éléments de renfort et illustrée par les figures annexées dans lesquelles :

– la figure 1 schématise le dispositif permettant la mise en oeuvre de la méthode, et

– la figure 2 représente en détail le bobinage des éléments de renfort.

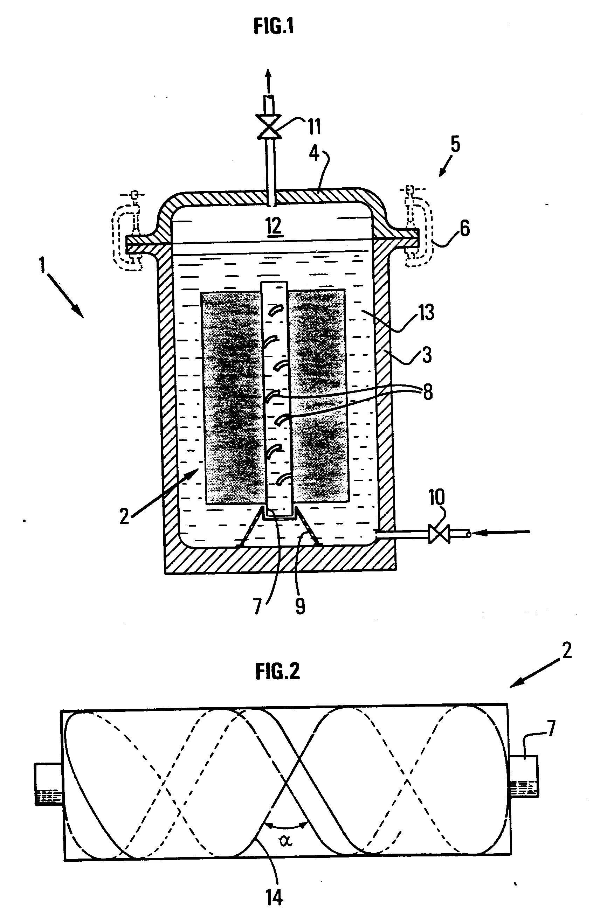

Sur la figure 1, l'enceinte 1 de préimprégnation de la bobine 2 d'éléments de renfort comporte un corps 3 et un couvercle 4 obturant ce corps avec des moyens de fermeture 5. Ces moyens de fermeture sont suffisamment étanches et adaptés pour permettre d'obtenir le vide dans l'enceinte et pour mettre l'enceinte sous légère pression. Ces moyens peuvent par exemple comprendre une garniture d'étanchéité placée entre le corps 3 et le couvercle 4 et des boulons à serrage rapide 6.

Dans l'exemple représenté sur les figures, les fibres de renfort sont enroulées sur un mandrin 7 creux qui est maintenu sensiblement vertical dans l'enceinte 1. Ce mandrin 7 est ajouré par des lumières 8 sensiblement uniformément réparties pour faciliter le dégazage correct des éléments de renfort. L'enceinte 1 comporte un orifice inférieur 10 situé sensiblement en dessous du niveau des éléments à imprégner, et par lequel la substance de préimprégnation est introduite ou enlevée.

L'enceinte 1 comporte en outre un orifice supérieur 11 permettant de réaliser le vide ou une mise en pression de l'enceinte 1. Cet orifice supérieur 11 communique avec un espace 12 intérieur à l'enceinte qui n'est pas mouillé par la subtance d'imprégnation 13.

L'existence de cet espace intérieur 12 permet notamment d'éviter que de la substance d'imprégnation ne remonte, par l'orifice supérieur 11, dans des moyens de pompage du vide.

L'exemple non limitatif suivant, relatif à la préimprégnation d'une bobine de fibres de verre de 2 kg, illustre une manière dont le procédé selon l'invention peut être mise en oeuvre.

La bobine 2 d'éléments de renfort étant disposée dans l'enceinte 1, on relie l'orifice 11 à des moyens de pompage du vide.

Avec ces moyens de pompage, on abaisse suffisamment la pression dans l'enceinte pendant un temps suffisant, par exemple en réalisant une pression absolue de quelques milimètres de mercure, pendant un quart d'heure. De cette manière, on peut éliminer des substances générant des inclusions nuisibles à la fabrication de pièces composites, telles des bulles de gaz ou de vapeur d'eau absorbées ou adsorbées dans les éléments de renfort.

Tout en maintenant le vide dans l'enceinte, on introduit lentement par l'orifice inférieur 10, une quantité suffisante de substance d'imprégnation préalablement dégazée et séchée de façon à ce qu'elle recouvre.encore les éléments de renfort une fois qu'ils ont été imprégnés.

Le dégazage et le séchage de la substance d'imprégnation peuvent être réalisés à l'aide d'un réservoir dans lequel on pratique le vide jusqu'à disparition totale de bulles. Par exemple, si la substance d'imprégnation est une résine à base de DGEBA (diglycidyléther du bisphénol A), le vide peut être de 2 à 3 torr pendant 30 minutes pour en dégazer et sécher 4 kg à 40°C.

Après avoir introduit la substance 13 dans l'enceinte 1, on peut, soit maintenir l'enceinte sous vide, soit la porter à une pression voisine de celle de l'atmosphère, soit la porter à des pressions plus élevées. L'efficacité de la préimprégnation est accrue avec la pression, cependant la diffusion de gaz dans la substance, qui n'est pas très conséquente à la pression atmosphérique, est à éviter aux pressions plus élevées. Toutefois, le maintien du vide permet l'obtention d'une excellente qualité de préimprégnation pour des temps acceptables. Ainsi, pour une bobine de 2 kg de "rovings" (fils) de verre (bobine ayant une épaisseur de verre de 3 cm), 2 heures suffisent à la préimprégnation.

Lorsque l'on réalise la préimprégnation sous pression, au lieu que le niveau de la substance dans l'enceinte soit au moins égal au niveau de la substance à la fin de la préimprégnation, on remplit,complètement l'enceinte puis, en veillant à ce qu'aucun gaz tel de l'air ou de la vapeur d'eau, ne soit en contact avec la substance, on réalise une pression hydraulique de manière à faire pénétrer la substance dans la bobine.

Cette pression hydraulique peut être obtenue, par exemple au moyen d'une pompe alimentée par la substance et alimentant l'enceinte, ou au moyen d'une déformation du volume de substance dans l'enceinte par exemple, en utilisant un fluide sous pression déformant une membrane de séparation avec la substance, ou en utilisant une enceinte à géométrie variable, telle une enceinte comportant un piston.

De manière à améliorer la pénétration de la substance d'imprégnation dans les éléments de renfort, on peut diminuer sa viscosité en accroissant sa température. Cela peut être obtenu en réchauffant la substance, par exemple de 30 à 50°C de manière à avoir une viscosité voisine par exemple de 5 Pa.s (5 Po), soit préalablement à son introduction dans l'enceinte, soit dans l'enceinte elle-même. Ce réchauffage de la résine ne doit pas être trop élevé afin d'éviter l'ébullition de certains composants et l'évolution de la résine .

Sans sortir du cadre de l'invention, et pour obtenir le même effet, on pourra réchauffer les éléments de renfort préalablement à l'introduction de la substance de manière qu'au contact de la substance cette dernière se réchauffe. Ce réchauffage des éléments de renfort, qui réduit la viscosité de la substance d'imprégnation, est en outre particulièrement favorable à la désorbtion des gaz et de l'eau responsables des inclusions nuisibles.

Si l'on veut désorber des éléments de renfort plus particulièrement l'eau, sans trop réchauffer la bobine de fibres, on pourra, de préférence pendant l'étape de mise sous vide, utiliser un chauffage par micro-ondes.

La figure 2 schématise une bobine 2 de fibres 14 trancannée sur un mandrin 7. Selon l'invention, le réglage de l'angle alpha ($\alpha$) entre des spires de couches consécutives d'une bobine permet de régler le taux d'imprégnation (rapport du volume de substance d'imprégnation au volume de fibres à imprégner), en outre plus l'angle alpha est voisin de 90° moins les risques de réduction des fils imprégnés, par effilochage au cours du débobinage de la bobine, sont grands. L'angle alpha satisfaisant peut être obtenu par retrancannage des bobines avec un pas des fibres adaptées. Ce retrancannage offre en outre l'avantage d'aérer et de régler la tension des fibres.

De la même manière que la méthode et le dispositif selon l'invention s'applique à la préimprégnation de bobine de fils de renfort, on pourra préimprégner des tissus ou des tresses enroulées ou non sur un mandrin.

## Revendications

1. - Procédé pour préimprégner avec une substance d'imprégnation exempte de solvants à l'état A, des éléments de renfort, tels des fibres, des tissus ou des tresses, lesdits éléments de renfort étant utilisables pour réaliser un matériau composite, caractérisé en ce qu'il comporte et se limite à la succession des étapes suivantes :

– on retrancanne ou bobine lesdits éléments de renfort sur un mandrin, les spires de couches consécutives d'une bobine faisant un angle alpha permettant de faciliter la pénétration de la substance au travers desdites couches et d'obtenir un taux d'imprégnation par la substance exempte de solvants non réactifs suffisant,

– on place lesdits éléments de renfort dans une enceinte

– on produit dans ladite enceinte un vide suffisant en intensité et en durée pour éliminer au moins la plus grande partie de l'eau et du gaz présents dans les éléments de renfort, et

– on effectue la préimprégnation en introduisant ladite substance dans l'enceinte de façon que lesdits éléments de renfort soient immergés par la substance durant toute l'étape de préimprégnation, les éléments de renfort préimprégnés obtenus étant exempts de solvants et dans l'état A.

2. - Procédé selon la revendication 1, caractérisé en ce que lesdits éléments de renfort sont des fibres bobinées sur un mandrin et en ce que les spires de couches consécutives se croisent sous un angle alpha au moins égal à 30°.

3. - Procédé selon l'une des revendications 1 ou 2, dans lequel lesdits éléments de renfort sont des fibres bobinées sur un mandrin, caractérisé en ce que le mandrin est ajouré.

4. - Procédé selon la revendication 1, caractérisé en ce que l'on dégaze sous vide ladite substance avant de l'introduire dans ladite enceinte.

5. - Procédé selon les revendications 1 à 4, caractérisé en ce que l'on utilise ladite substance chaude.

6. - Procédé selon l'une des revendications 1 à 5, caractérisé en ce qu'après avoir introduit la quantité suffisante de ladite substance, on maintient ladite enceinte sous vide.

7. - Procédé selon l'une des revendications 1 à 6, caractérisé en ce qu'après avoir produit le vide dans l'enceinte et introduit ladite substance dans ladite enceinte en quantité suffisante pour que ladite substance recouvre encore lesdits éléments une fois qu'ils seront imprégnés, on met l'enceinte sous pression.

8. - Procédé selon la revendication 7, caractérisé en ce que lorsque l'on met l'enceinte sous pression, on empêche l'introduction de matière, telle des gaz ou de l'eau dans la substance imprégnant lesdits éléments du renfort.

## Patentansprüche

1. Verfahren zum Vorimprägnieren - mit einer von Lösungsmitteln freien Imprägnierungssubstanz im Zustand A - von Verstärkungselementen, wie Fasern, Geweben oder Litzen beziehungsweise Geflechten, wobei diese Verstärkungselemente zur Herstellung eines Verbundmaterials verwendbar sind, dadurch gekennzeichnet, daß es umfaßt und sich auf die Aufeinanderfolge der folgenden Stufen beschränkt:

– Man führt diese Verstärkungselemente zu oder verteilt sie oder bobiniert sie auf einem Dorn, wobei die Windungen aufeinanderfolgender Schichten einer Bobine einen Winkel alpha bilden, der es ermöglicht, das Eindringen der Substanz durch diese Schichten zu erleichtern und einen ausreichenden Imprägnierungsgrad durch die von nichtreaktiven Lösungsmitteln freie Substanz zu erhalten,

– man ordnet diese Verstärkungselemente in einer Kammer an,

– man erzeugt in dieser Kammer einen hinsichtlich Stärke und Dauer ausreichenden Unterdruck, um wenigstens den größten Teil des Wassers und der in den Verstärkungselementen vorhandenen Gase zu eliminieren, und

– man nimmt die Vorimprägnierung vor, indem man diese Substanz in die Kammer derart einführt, daß diese Verstärkungselemente von der Substanz während der gesamten Vorimprägnierungsstufe getaucht werden, wobei die erhaltenen vorimprägnierten Verstärkungselemente frei von Lösungsmitteln und im Zustand A sind.

2. Verfahren nach Anspruch 1, dadurch gekennzeichnet, daß diese Verstärkungselemente auf einen Dorn bobinierte Fasern sind und daß die Windungen aufeinanderfolgender Schichten sich unter einem Winkel alpha von wenigsten 30° kreuzen.

3. Verfahren nach einem der Ansprüche 1 oder 2, bei dem diese Verstärkungselemente auf einen Dorn bobinierte Fasern sind, dadurch gekennzeichnet, daß der Dorn durchbrochen ist.

4. Verfahren nach Anspruch 1, dadurch gekennzeichnet, daß man unter Unterdruck diese Substanz entgast, bevor sie in diese Kammer eingeführt wird.

5. Verfahren nach einem der Ansprüche 1 bis 4, dadurch gekennzeichnet, daß man diese Substanz heiß verwendet.

6. Verfahren nach einem der Ansprüche 1 bis 5, dadurch gekennzeichnet, daß nach Einführen der ausreichenden Menge dieser Substanz man diese Kammer unter Vakuum hält.

7. Verfahren nach einem der Ansprüche 1 bis 6, dadurch gekennzeichnet, daß nach Erzeugen des Unterdrucks in dieser Kammer und Einführen dieser Substanz in diese Rammer in ausreichender Menge, damit diese Substanz noch diese Elemente überdeckt, wenn sie einmal imprägniert sind, man die Kammer unter Druck setzt.

8. Verfahren nach Anspruch 7, dadurch gekennzeichnet, daß dann, wenn man die Kammer unter Druck setzt, das Einführen von Material, wie Gas oder Wasser, in die diese Verstärkungselemente imprägnierende Substanz verhindert.

**Claims**

1) A process for preimpregnating, with an impregnating substance free of solvents in state A, reinforcing elements such as fibers, fabrics or braids, said reinforcing elements being usable to make a composite material, characterized in that it comprises and is limited to the following successive stages :
   – said reinforcing elements are spooled or wound onto a mandrel, the consecutive layer turns of a spool forming an angle alpha allowing to facilitate the penetration of the substance through said layers and to obtain a sufficient rate of impregnation by the substance free of non reactive solvents,
   – said reinforcing elements are placed in an enclosure,
   – a vacuum of sufficient intensity and duration is produced in said enclosure to remove at least the most part of the water and the gas present in the reinforcing elements, and
   – the preimpregnation is performed by introducing said substance into the enclosure so that said reinforcing elements are immersed in the substance during the total preimpregnation stage, the preimpregnated reinforcing elements obtained being free of solvents and in state A.

2) A process as claimed in claim 1, wherein said reinforcing elements are fibers wound onto a mandrel and wherein the consecutive layer turns cross at an angle alpha of at least 30°.

3) A process as claimed in any one of claims 1 or 2, wherein said reinforcing elements are fibers wound onto a mandrel, characterized in that the mandrel is punched.

4) A process as claimed in claim 1, wherein said substance is degassed under vacuum before being introduced into said enclosure.

5) A process as claimed in claims 1 to 4, wherein said substance is used hot.

6) A process as claimed in any one of claims 1 to 5, wherein, after introducing the sufficient quantity of said substance, said enclosure is maintained under vacuum.

7) A process as claimed in any one of claims 1 to 6, wherein, after producing the vacuum in the enclosure and introducing said substance into said enclosure in a sufficient quantity for said substance still to cover said elements once they have been impregnated, the enclosure is pressurized.

8) A process as claimed in claim 7, wherein, when the enclosure is pressurized, introduction of material such as gas or water into the substance impregnating said reinforcing elements is prevented.

**FIG.1**

**FIG.2**